# EUROPEAN PATENT APPLICATION

(11) **EP 2 884 758 A1**
(43) Date of publication of application: **17.06.2015**
(21) Application number: 14165346.9
(22) Date of filing: 22.04.2014
(51) Int. Cl.: H04N 21/431, H04N 21/442, G11B 27/10, G11B 27/34, H04N 21/433, H04N 21/466, H04N 21/482

(54) **Electronic apparatus, scene list processing method and information storage medium**

(30) Priority: 13.12.2013 JP 2013258309
(71) Applicant: Kabushiki Kaisha Toshiba, Tokyo 105-8001 (JP)
(72) Inventor: Ueda, Yutaka, Tokyo, 105-8001 (JP)
(74) Representative: Henkel, Breuer & Partner

(57) **Abstract**

According to one embodiment, a scene list of a certain program is obtained from a server (4001). The scene list includes a plurality of items. Each item includes each scene comment and each scene location time point that indicates each scene location in the certain program. Regarding a recorded program, a data storage unit (236) stores a program elapse time point that indicates a location where at least replay of the recorded program has elapsed. When the recorded program having the same content as the certain program exists, a mask processing unit (233) compares the each scene location time point and the program elapse time point and performs processing to mask a scene comment corresponding to a scene location time point subsequent to the program elapse time point.

## Description

Embodiments described herein relate generally to an electronic apparatus, a scene list processing method and an information storage medium.

There is provided a method for using a scene list as an aspect of a method for viewing content such as a recorded program. This method makes, for example, so-called characteristic scene information that indicates a time in a program where a characteristic scene of a broadcast program appears. A set of this characteristic scene information is treated as a program scene list. The apparatus for executing this method is capable of uploading to a server a program scene list made.

A user who wants a program scene list operates an Internet-connectable television receiver and requests a program scene list that he wants.

A requested program scene list is downloaded to and displayed on a television receiver having a function to automatically record a program on a storage medium. A user is allowed to select from a displayed program scene list a scene that he is interested in.

When the user selects and determines a scene that he is interested in, the television receiver is capable of replaying and displaying the program recorded on the storage medium. In this case, the program is replayed from the location of a selected scene.

Also, there is provided an apparatus to realize a method for controlling the relationship between an unviewed program and a news program explained below, as another aspect of a method for viewing content.

For example, there is a case in a recording/replaying apparatus where although an automatically recorded sport program has not been viewed, the game result of the sport program is broadcast by a news program. In this case, a user is notified of the game result by the news program before viewing the sport program.

A user gets less interested if he replays and views a sport program after recognizing the game result. When receiving a news program, the receiver determines whether other unreplayed programs pertaining to the news program are recorded. This receiver has a substitution means for substituting news portions pertaining to unviewed live programs with other content at the time of replaying and outputting a news program if an unreplayed program exists.

A general architecture that implements the various features of the embodiments will now be described with reference to the drawings. The drawings and the associated descriptions are provided to illustrate the embodiments and not to limit the scope of the invention.
FIG. 1 is a typical configuration view of a network to which an embodiment is applied.
FIG. 2A is a diagram illustrating a typical example of a scene list displayed in the television receiver of the embodiment.
FIG. 2B is a diagram illustrating another typical example of a scene list displayed in the television receiver of the embodiment.
FIG. 3 is a configuration view illustrating a typical example of making a scene list in a server to which the embodiment is applied.
FIG. 4 is a diagram illustrating typical examples of the scene comments of the scene list shown in FIG. 3.
FIG. 5 is a typical configuration view of the television receiver to which the embodiment is applied.
FIG. 6 is a typical flowchart of the operation examples of the television receiver to which the embodiment is applied.
FIG. 7 is a diagram illustrating a typical example of a screen when a scene list is obtained by the television receiver to which the embodiment is applied.
FIG. 8A is a diagram illustrating a typical example of a menu screen when the setting of avoiding viewing beforehand is performed for the television receiver to which the embodiment is applied.
FIG. 8B is a diagram illustrating a typical example of a setting screen when the setting of avoiding viewing beforehand is performed by the television receiver to which the embodiment is applied.
FIG. 9 is a diagram illustrating another typical configuration example of the television receiver to which the embodiment is applied.
FIG. 10 is a diagram illustrating typical examples of scene lists at the time of digest replay displayed in the television receiver of another embodiment.
FIG. 11 is a diagram illustrating typical examples of digest items at the time of digest replay displayed in the television receiver of still another embodiment.

Various embodiments will be described hereinafter with reference to the accompanying drawings.

In general, according to one embodiment, the scene list of a certain program is obtained from a server. The scene list includes a plurality of items. Each item includes each scene comment and each scene location time point that indicates each scene location in the certain program.

Regarding a recorded program, a viewing history storage unit stores a program elapse time point that indicates a location where at least the replay of the recorded program has proceeded.

When the recorded program having the same content as the certain program exists, a mask processing unit compares the each scene location time point and the program elapse time point and performs processing to mask a scene comment corresponding to a scene location time point subsequent to the program elapse time point.

Embodiments will be hereinafter described with reference to the accompanying drawings.

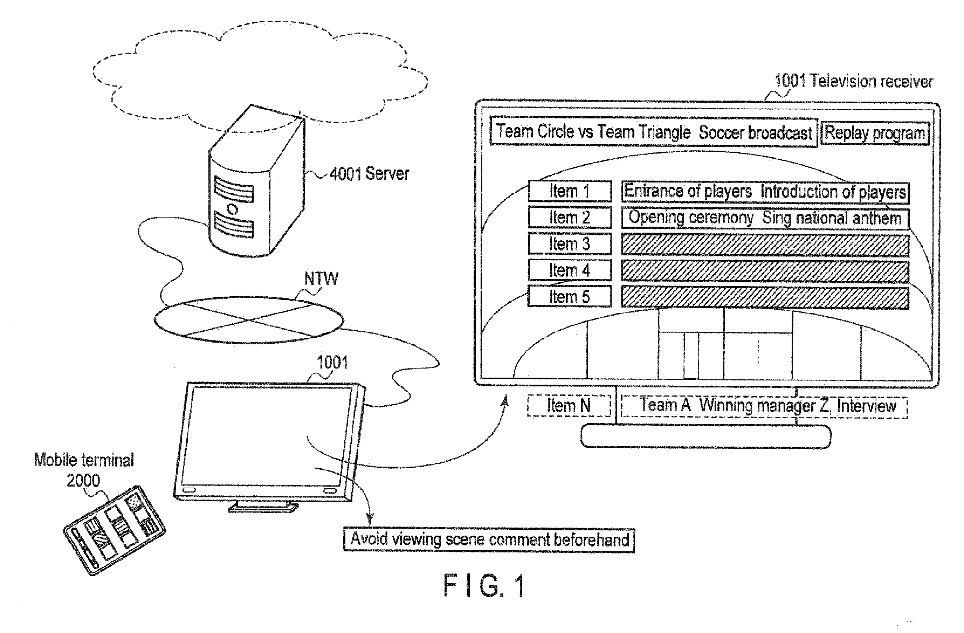

In FIG. 1, 1001 represents a television receiver. The television receiver can be connected to a service server 4001 via network NTW. The service server 4001 may be simply referred to as server or cloud server. The name of the service server 4001 is not limited thereto.

The operation status of the television receiver 1001 is controlled by an operation signal from a remote controller or a mobile terminal 2000. The television receiver 1001 is shown enlarged to the right as the screen is small in the left of FIG. 1. It is assumed that the television receiver 1001 comprises a recording/replaying apparatus configured to automatically record a plurality of programs. The television receiver 1001 may be referred to as electronic apparatus.

The television receiver 1001 is capable of, for example, displaying the scene list of a certain program. The scene list includes item 1, item 2, item 3, ..., item n. Each item includes a scene comment and a scene location time point that indicates a time location in the certain program. Note that an item may be referred to as list item.

A scene comment is, for example, a comment on each scene. A scene comment is a text, diagram, mark, symbol or data row by a combination thereof.

The example of FIG. 1 displays a soccer stadium in the background and each item on the picture. This recorded program is a content in which a soccer game is recorded. Item 1 displays a text "Entry of Players, Introduction of Players." Item 2 displays a text "Opening Ceremony, Sing National Anthem." Items 3, 4 and 5 are masked in this example.

That is, the television receiver 1001 is capable of obtaining the scene list of a certain program from the server 4001. The scene list includes a plurality of items. Each item includes a scene comment and a scene location time point that indicates each scene location in the certain program, respectively.

Also, in the television receiver 1001, regarding a recorded program and broadcast program, a data storage unit (may be referred to as viewing history storage unit) stores a program elapse time point that indicates a location where the replay of the recorded program and the viewing of a received broadcast program have elapsed.

When the storage unit stores the recorded program having the same content as the certain program, the following processing will be performed.

That is, the control unit compares the each scene location time point with the program elapse time point. The control unit detects a scene comment corresponding to a point subsequent to the program elapse time point, that is, a scene location time point that indicates a future time. The control unit then performs processing to mask the detected scene comment. That is, the control unit performs mask processing for a scene comment that belongs to a time zone subsequent to a program elapse time point that indicates a location where the replay of a certain program has elapsed.

Note that an item can be scrolled on a screen upward or downward when a scroll instruction is transmitted from the mobile terminal 2000.

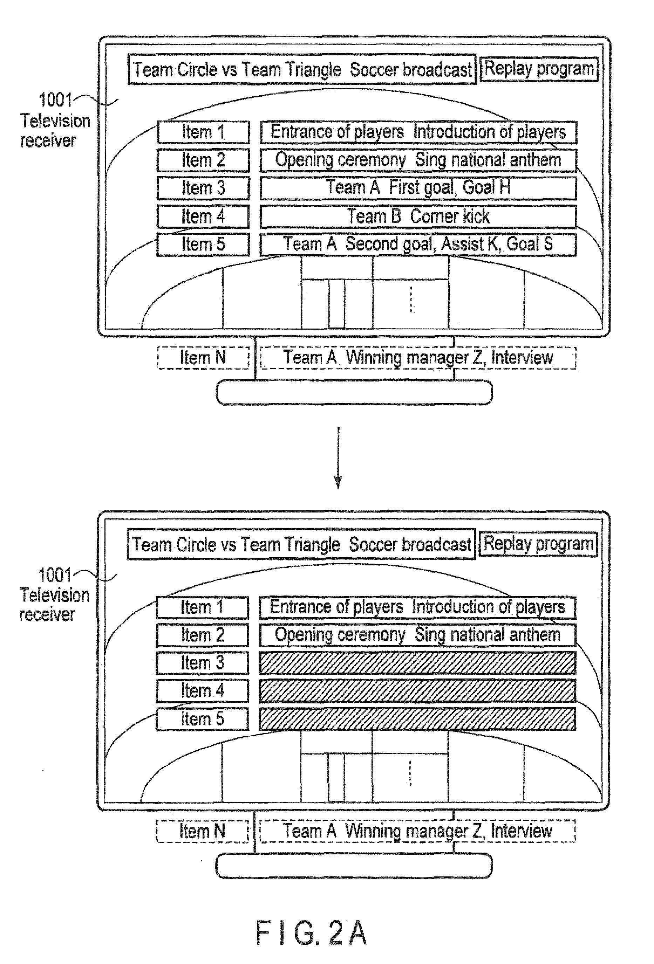

FIG. 2A illustrates an example of a screen when the processing of avoiding viewing beforehand is not set to the scene list (FIG. 2A, upper) and an example of a screen when the processing of avoiding viewing beforehand is set to the scene list (FIG. 2A, lower).

When the processing of avoiding viewing beforehand is not set, item 3 describes a comment "Team A, First Goal, Goal H," item 4 "Team B, Corner Kick" and item 5 "Team A, Second Goal, Assist K, Goal S."

Thus, when the processing of avoiding viewing beforehand is not set, a user is allowed to recognize the situation of a soccer game and even its result by referring to items in order. However, a user gets less interested if he replays and views a program after recognizing the game result.

When the processing of avoiding viewing beforehand is set, a display as shown in the lower screen of FIG. 2A can be obtained. In this example, it is assumed that a user has viewed or replayed by a time point corresponding to item 2.

Since the scene comments of item 3, item 4 and item 5 are masked in this screen, a user never recognizes the game result through a scene comment before replaying and viewing a program.

A user is allowed to operate a remote controller or a mobile terminal, select an item that he wants, for example, with cursor movement, press a determination button, and then, press a replay button. By this operation, the program content of an item subsequent to the selected item is replayed. Alternatively, by this operation, the digest replay of a program subsequent to the selected item is executed. Digest replay will be explained later.

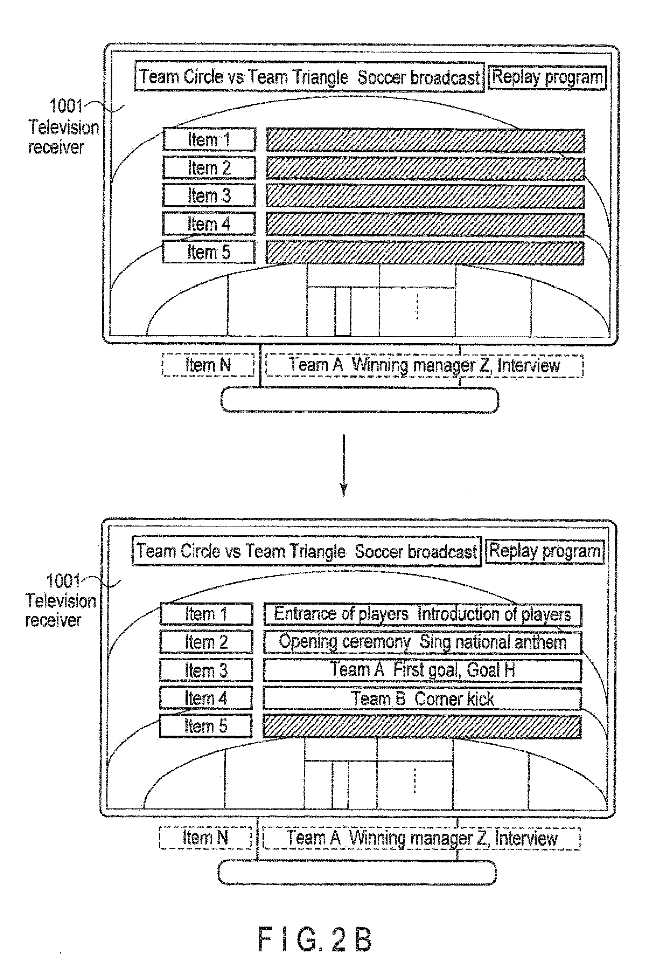

FIG. 2B illustrates an example where the processing of avoiding viewing beforehand is set for a scene list and all the items are masked (FIG. 2B, upper). In this case, it is assumed that a user does not view this soccer game at all. If a user selects, for example, new item 4 and presses a determination button, the television receiver 1001 is capable of removing the mask of item 4 and preceding items 1, 2 and 3 (FIG. 2B, lower).

It is possible to set as follows the processing of avoiding viewing beforehand in FIGS. 2A and 2B explained above.

In the processing of avoiding viewing beforehand in an embodiment, the control unit may be configured to automatically judge a program name, genre or the like and to execute the mask measure for a scene comment. For example, the processing of avoiding viewing beforehand is executed in a sport program while not in a new or drama program.

In another embodiment, it may be possible that a user determines whether the processing of avoiding viewing beforehand is executed or not via a menu screen or the like. Further, it may be possible to identify the genre and name of a program for which the processing of avoiding viewing beforehand is executed.

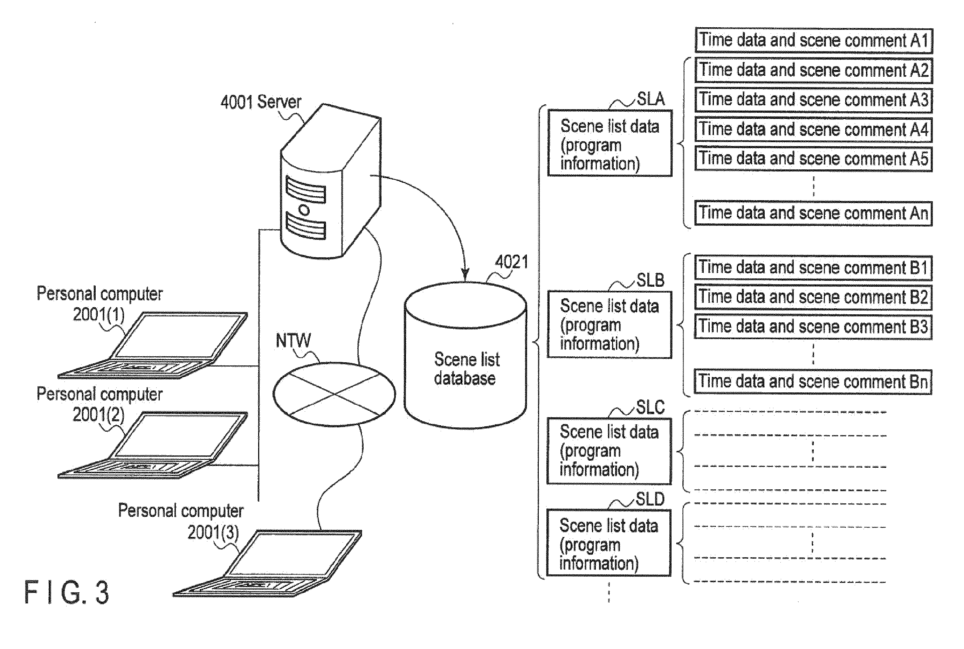

FIG. 3 illustrates a system to make a scene comment for items. The scene comment of each program is uploaded from, for example, a personal computer 2001 (1), 2001 (2), 2001 (3), . . . , 2001 (n). The scene list including the scene comment of each program is made by a supplier, program manager, program provider, program sponsor or the like and is uploaded to the server 4001 in advance. Usually, one scene list is made for one program. However, there is a case where plural types of scene lists are made for one program in accordance with different themes (characteristic scene). When plural types of scene lists are made for one program, different algorithms may be used. For example, a scene list having a theme where only male vocalists appear and a scene list where only male and female pairs appear may be independently made.

Scene list database 4021 in the server 4001 stores scene lists SLA, SLB, SLC, SLD, ... of each program. In this example, one scene list is made for one program. Scene list data is described for scene lists SLA, SLB, SLC, SLD, . . . , respectively.

Scene list data includes, as basic data, program information such as a program channel, broadcast station, broadcast time zone, genre, performer name, director name and comment. Also, program information may include sponsor.

Scene list data SLA includes time data of scene 1 and scene comment A1, time data of scene 2 and scene comment A2, time data of scene 3 and scene comment A3, time data of scene 4 and scene comment A4, time data of scene 5 and scene comment A5, ... , time data of scene n and scene comment An.

Scene list data SLB includes time data of scene 1 and scene comment B1, time data of scene 2 and scene comment B2, time data of scene 3 and scene comment B3, ... , time data of scene n and scene comment Bn.

Similarly, other scene list data SLC and SLD include a plurality of time data and scene comments. Time data indicates a relative time from the start of a program.

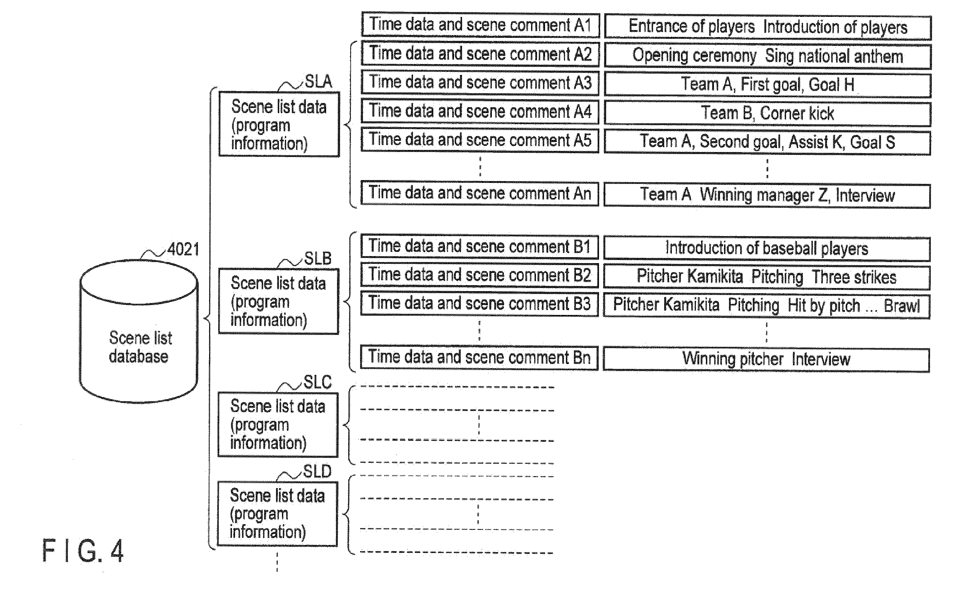

FIG. 4 illustrates the examples of scene comments.

For example, scene list SLA is a scene list about a soccer game as follows:
Scene comment A1: Entrance of Players, Introduction of Players
Scene comment A2: Opening Ceremony, Sing National Anthem
Scene comment A3: Team A, First Goal, Goal "H"
Scene comment A4: Team B, Corner Kick
Scene comment A5: Team A, Second Goal, Assist "K," Goal "S"
...
Scene comment An: Team A, Winning Director "Z," Interview

For example, scene list SLB is a scene list about a baseball game as follows:
Scene comment B1: Introduction of Baseball Players
Scene comment B2: Pitcher Kamikita, Pitching, Three Strikes
Scene comment B3: Pitcher Kamikita, Pitching, Hit by a pitch ... Brawl
...
Scene comment Bn: Team A, Winning Pitcher, Interview

When the processing of avoiding viewing beforehand is not set as explained above, a user is allowed to recognize the situation of a soccer game and even the result of the game by referring to items in order. However, a user gets less interested if he replays and views a program after recognizing the game result. The apparatus of the present embodiment is capable of enabling the function of avoiding viewing beforehand.

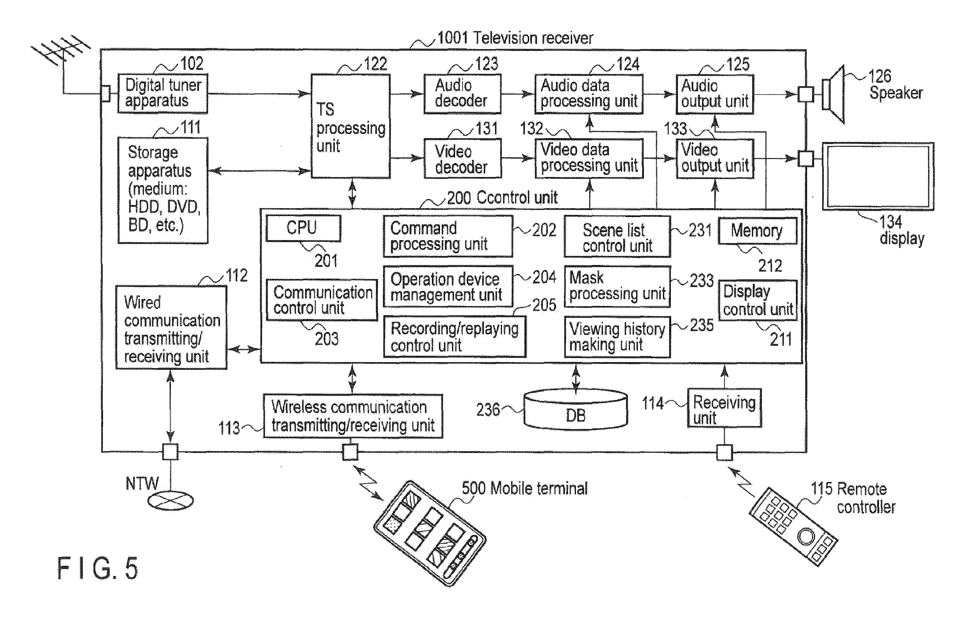

FIG. 5 illustrates the television receiver 1001, as an example of an electronic apparatus. The television receiver 1001 comprises a digital tuner apparatus 102. The digital tuner apparatus 102 comprises a plurality of tuners capable of receiving a scrambled digital terrestrial broadcast signal. The digital tuner apparatus 102 may comprise a tuner for receiving BS/CS digital broadcast (not shown).

The signals of a plurality of channel broadcast programs received in the digital tuner apparatus 102 is input in a TS processing unit 122.

In the TS processing unit 122, the transport streams (TS) of a plurality of channels (CH) are remultiplexed to one TS row. The multiplexed multiplex TS includes a packet row of each channel's broadcast program. The identification information for identifying channel and packet is added to the packet of each channel. A multiplex TS is input in a storage apparatus 111. Also, among the TSs input in the TS processing unit 122, a packet including control information is input in a control unit 200 and then processed.

The storage apparatus 111 comprises a hard disk drive and an optical disk recording/replaying apparatus. An optical disk is, a digital versatile disk (DVD), blue ray disk (BD) or the like.

The packet transmitted from the TS processing unit 122 to the control unit 200 comprises an entitlement control message (ECM), which is encoded information of a broadcast program, the information of an event information table (EIT), which is a table that describes event information such as program name, performer and start time, and electronic program guide (EPG) information. Such information may be referred to as program information.

The video data included in a packet is encoded by a moving picture expert group (MPEG) mode, advanced video coding (AVC) mode or the like. Also, the audio data in an audio packet is encoded by a pulse code modulation mode, Dolby mode, MPEG mode or the like. Therefore, data in each packet is decoded in accordance with each mode.

Among the packets separated from the TS processing unit 122, a packet including audio data is input in an audio decoder 123 and decoded in accordance with an encoding mode. The audio data decoded in the audio decoder 123, for which synchronous processing, volume adjustment and the like are performed in an audio data processing unit 124, is supplied to an audio output unit 125. The audio output unit 125 executes stereo separation processing in accordance with a speaker system and supplies output to a speaker 126.

Among the packets separated in the TS processing unit 122, a packet including video data is input to a video decoder 131 and then decoded in accordance with an encoding mode. For the video data decoded in the video decoder 131, synchronous processing, brightness adjustment, color adjustment and the like are performed in a video data processing unit 132. The output of the video data processing unit 132 is supplied to a video output unit 133. The video output unit 133 is capable of multiplexing the data, diagram, program list, scene comment and the like from the control unit 200 into a main video signal.

Also, the video output unit 133 sets a scale, resolution, line number, aspect ratio and the like in accordance with an display 134 for an output video signal. The video output unit 133 outputs to the display 134 a set output video signal.

Note that the audio packet and video packet of a pay program may be encoded. In this case, there is a processing system to decode by using key information, which is omitted here.

The control unit 200 comprises a central processing unit (CPU) 201 and a command processing unit 202 configured to process commands such as operation input. Also, the control unit 200 comprises a communication control unit 203, an operation device management unit 204, a recording/replaying control unit 205, a display control unit 211 and a memory 212. Further, the control unit 200 comprises an electric program guide (EPG) data processing unit, a recording control unit and the like, which are not shown here.

Furthermore, the control unit 200 comprises a scene list control unit 231, a mask processing unit 233 and a viewing history making unit 235.

The CPU 201 adjusts the movement sequence of the control unit 200 as a whole. The command processing unit 202 is capable of analyzing the operation command input from outside and reflecting on the television receiver 1001 the operation responded to a command.

The operation device management unit 204 is capable of understanding and managing the identification data of a device such as a mobile terminal 500 and a remote controller 115, which gives an operation signal to the control unit 200. When an operation signal from the mobile terminal 500 or the remote controller 115 is input, the CPU 201 confirms whether the ID of an operation device is registered in the operation device management unit 204.

The recording/replaying control unit 205 controls the operation of a recording system to record a received program in the storage apparatus 111. The recording/replaying control unit 205 also controls the operation of a replaying system to replay a program recorded in the storage apparatus 111. For replay mode, there are usual replay, digest replay, program replay based on a scene list and the like.

The display control unit 211 is capable of controlling video signals displayed in the display 134 as a whole via the video output unit 133. Also, the display control unit 211 is capable of performing adjustment processing for the resolution, display size, display area and the like of image signals. Further, the display control unit 211 is capable of supplying to the video output unit 133 a video signal in a program table made by using EPG data and a menu video signal made in the control unit 200 responded to an operation signal. Furthermore, the display control unit 211 is capable of displaying the scene lists and items mentioned above.

The memory 212 is capable of saving each type of data and application saved in the control unit 200.

The communication control unit 203 communicates with the outside to incorporate an operation command, data, content and the like. The incorporated content and data can be stored in, for example, the storage apparatus 111 or the memory 212. The communication control unit 203 is capable of transmitting data, content and the like from the television receiver 1001 to the outside.

The communication control unit 203 is connected to a wireless communication transmitting/receiving unit 113 and a wired communication transmitting/receiving unit 112. The wired communication transmitting/receiving unit 112 is capable of transmitting/receiving with the cloud server 4001 or a home server via network NTW such as internet. The wireless communication transmitting/receiving unit 113 is capable of transmitting/receiving data with the mobile terminal 500 (may be plural), which is used for short-range communication. Also, the television receiver 1001 is capable of receiving an operation signal from the remote controller 115 via a receiving unit 114.

The mobile terminal 500 is capable of performing remote control for the television receiver 1001.

The mobile terminal 500 is capable of accessing to a server via a base station (not shown), internet or the like. The mobile terminal 500 is capable of downloading each type of application and game as well as content provided by a server and transferring them to the control unit 200 via the wireless communication transmitting/receiving unit 113. Also, the mobile terminal 500 is capable of transferring information to obtain content (such as web server address, mail address and network address) to the control unit 200 via the wireless communication transmitting/receiving unit 113.

It may be possible that a video, still image and picture image as well as web server address, mail address and the like mentioned above is called "recommended information" or "interest information."

The control unit 200 receives via the communication control unit 203 the content, application or game soft transferred from the mobile terminal 500.

Also, the communication control unit 203 is capable of storing received content in the memory 212. The content may be stored in the storage apparatus 111 responded to operation commands or automatically. The storage apparatus 111 is capable of recording received content in, for example, a hard disk. In a hard disk, content are managed as content files,

The display control unit 211 stores and/or manages a menu video signal, a program table video signal, a scene list obtained from outside and the like for display. When a menu, program table or scene list is displayed, menu screen data, a program table video signal or a scene list is read out from a data storage unit (memory or hard disk) based on the control of the display control unit 211 and supplied to the video output unit 133. This enables a menu image and program table image to be displayed in the display 134.

In this case, characteristic processing is applied to a scene list in the present embodiment, as explained in FIGS. 1-4.

A menu video signal for display, a program table video signal and the like can be transmitted to the mobile terminal 500. A menu video signal, program table video signal, operation panel video signal and the like can be transmitted by the communication control unit 203 when requested by the mobile terminal 500.

The mobile terminal 500 is capable of displaying a menu video signal, program table video signal, an operation panel video signal and the like on the screen of a touchpanel. A user is allowed to give an operation instruction signal to the television receiver 1001 by touching the operation button displayed on the screen of a touch (or point) panel.

The viewing history making unit 235 in the control unit 200 makes viewing history data that indicates which program and by which part a user has viewed (or replayed), and stores it in a data storage unit 236 (may be referred to as viewing history storage unit). Viewing history data includes data of unviewed (unreplayed) programs. Viewing history data has, as data, a time point when a program is viewed (replayed) from the start and this viewing (replay) is stopped. A program elapse time point is the start, middle or end location of a program, which is represented by a relative time from the start of a program.

The television receiver 1001 is capable of automatically recording a plurality of channel programs in the storage apparatus 111. The storage apparatus 111 is capable of accumulating a plurality of channel programs of one month or one month and a half. Therefore, there is a case where, among a large number of programs automatically recorded in the past, a program that has not been viewed (or replayed) by a user is stored in the storage apparatus 111. A user may replay and view a certain program stored in the storage apparatus 111 later than a broadcast date. Also, a user may view a certain program on a broadcast date. Further, a user may interrupt a program being automatically recorded during viewing.

When a user selects a program that he wants from a plurality of programs stored in the storage apparatus a 111, the program table data of the past program stored in, for example, the memory 212 is used for reference. Program table data is made by using an EPG processing circuit (not shown) via electronic program guide (EPG) data. Program table data is time schedule data of past, present and future programs.

In the present embodiment, display control of a scene list is performed in association with scene list items and viewing history. The control of a scene list is executed mainly by the scene list control unit 231, the mask processing unit 233, the viewing history making unit 235 and the display control unit 211.
Also, a scene list is obtained mainly by the scene list control unit 231 and the communication control unit 203.

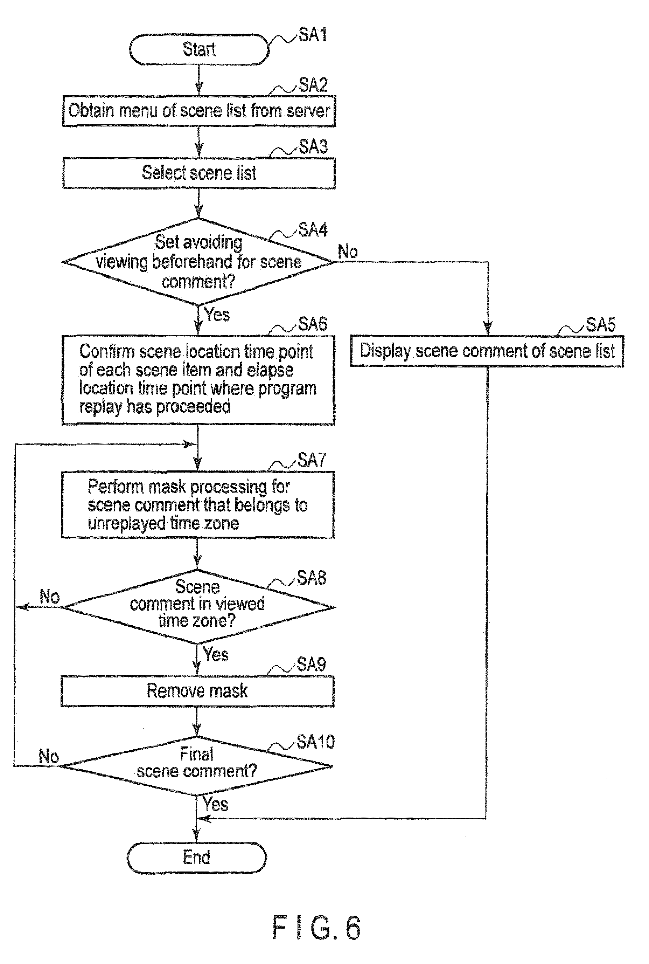

FIG. 6 is a flowchart illustrating the operation at the time of processing a scene list by operating the communication control unit 203, the mask processing unit 233, the display control unit 211 based on the control of the scene list control unit 231. In the present embodiment, the communication control unit 203 may be referred to as a scene list obtaining unit.

When the operation for displaying a scene list menu is performed, a scene list menu is obtained from a server and is displayed in the display 134 (steps SA1, SA2). A scene list menu is displayed as a list of a plurality of programs where a scene list is established or annexed.

A user is allowed to operate a mobile terminal or remote controller, control the cursor on a screen and designate/determine a program that he wants. That is, a user selects a scene list that he wants (step SA3).

A scene list that he wants can be thus obtained from a server. It is determined here whether the setting of avoiding viewing beforehand for a scene comment is set for the television receiver (step SA4). The setting information of avoiding viewing beforehand is stored by, for example, the scene list control unit 231.

When the setting of avoiding viewing beforehand is not performed, the scene comment of a scene list is displayed (step SA5). However, when the setting of avoiding viewing beforehand is performed, data comparison is made between a scene location time point included in each item of a scene list and a program elapse time point at a point where the replay of a program has elapsed. This data comparison determines a scene comment that belongs to time zones where the program has not been replayed. The mask processing unit 233 performs mask processing for a scene comment that belongs to these unreplayed time zones. As a result, mask processing is performed for a screen comment, as explained in FIGS. 1 and 2.

The mask processing unit 233 removes the mask of a scene comment in a zone viewed (or replayed) (steps SA8, SA9). When a program has been viewed (or replayed) by a time zone that belongs to the scene comment of the end of a program, the mask processing is ended (step SA10).

It has been explained that each item of a scene list includes a scene location time point.

This scene location time point is available when a program is replayed from a certain point to the end. That is, a user operates a remote controller, designates with a cursor an arbitrary item that describes a scene comment and presses a determination button. Then, the program of an item subsequent to the designated item is continuously replayed to the end.

Also, this scene location time point is available for performing digest replay of a program. That is, a user operates a remote controller, designates with a cursor an arbitrary item (first scene location time point) that describes a scene comment and presses a determination button. Then, the television receiver replays a program for 5 to 30 seconds from the first scene location time point, replays a program for 5 to 30 seconds from the second scene location time point and replays a program for 5 to 30 seconds from the third scene location time point. It is thus possible to use each scene location time point.

Another method for performing digest replay of a program may include a start scene location time point and an end scene location time point (so-called a pair of scene location time points). The replay time between the start and end of a scene location time point is, for example, approximately 5 to 30 seconds, which is not limited thereto. It may be possible to set a replay time of approximately 5 seconds to a minute optionally. Digest replay can be performed by preparing a plurality of such pair of scene location time points.

It may be possible to define a mode for performing ordinary replay of a program as "program replay" and a mode for performing digest replay of a program "digest replay" by using a scene list. It may also be possible when a scene list is displayed on a display screen, the control unit of the television receiver is configured to select either of "program replay" or "digest replay" of a replay mode.

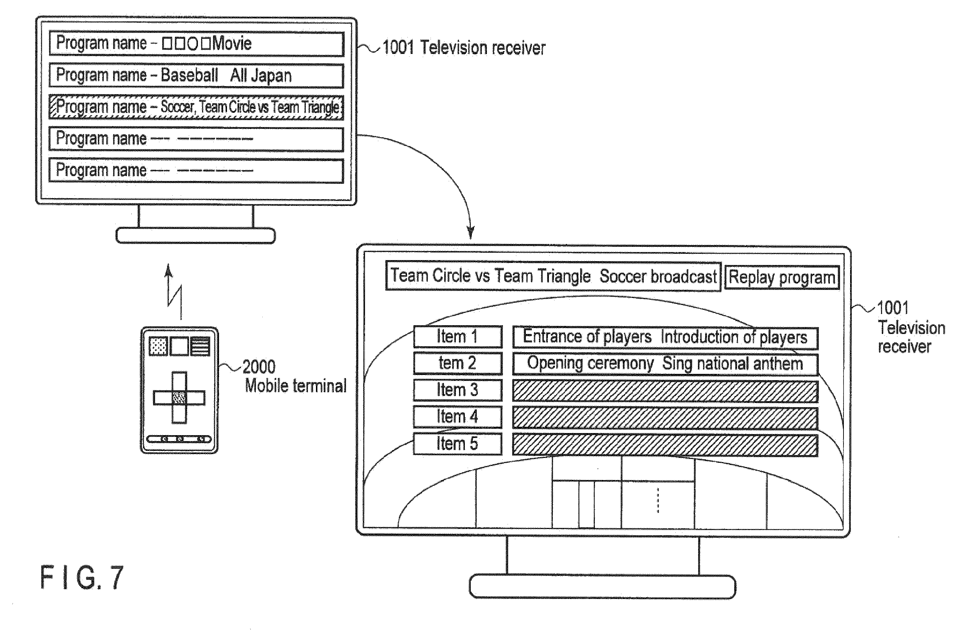

FIG. 7 illustrates a typical example of a screen when a scene list is obtained by the television receiver 1001. A user operates the mobile terminal 2000, selects a button for obtaining a scene list and presses a determination button. Then, the television receiver 1001 obtains from a server the program name of a program where a scene list is annexed. The example in this figure indicates that program names such as ". . . Movie," "Baseball, All Japan" and "Soccer, Team Circle vs Team Triangle" and the like are listed up (FIG. 7, left). If a user performs cursor operation, selects a program name "Soccer, Team Circle vs Team Triangle" and presses a determination button, items 1, 2, 3, ... n about "Soccer, Team Circle vs Team Triangle" are shown as in the right of FIG. 7. The example of this figure indicates that a user has viewed a program by the time of item 2, as explained in FIG. 2A above.

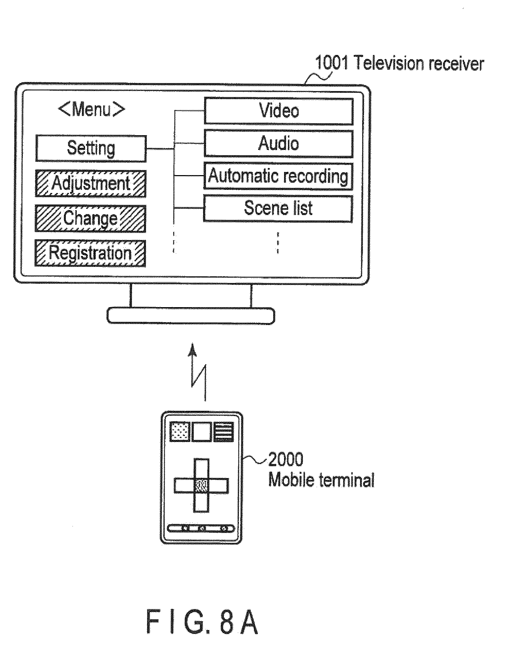

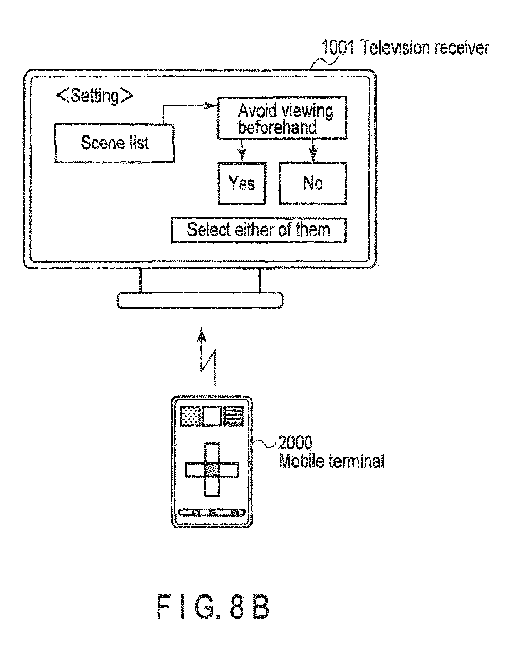

FIGS. 8A and 8B illustrate a procedure of setting the processing of avoiding viewing beforehand for a scene list for the television receiver 1001 at the initial setting or from a certain point. First of all, a user selects the menu button of the mobile terminal 2000 and presses a determination button, which makes a menu appear on the screen of the television receiver 1001. The menu includes items such as "Setting," "Adjustment," "Change" and "Registration." It is assumed that a user selects item "Setting" by operation. The example of this figure exemplifies that item "setting" is highlighted.

Under such a condition, items "Video," "Audio," "Automatic Recording," "Scene List" and the like are displayed. A user is allowed to select item "Scene List" by operation.

When a user selects "Scene List" and presses a determination button, the setting items about "Scene List" appear as shown in FIG. 8B. That is, items to select "Yes" or "No" for setting avoiding viewing a scene list beforehand for a scene list appear.

When a user moves a cursor to select either "Yes" or "No" for setting avoiding viewing beforehand, the setting content is registered in a memory.

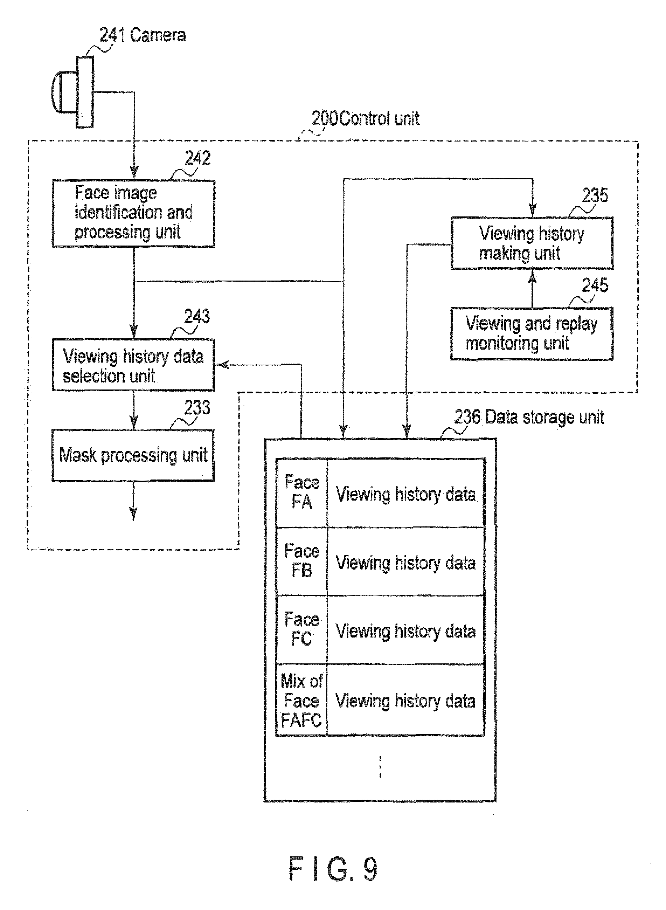

FIG. 9 illustrates a configuration example when the television receiver 1001 comprises a face image identification and processing unit 242. 241 represents a camera, which can capture an image of a user who operates the television receiver 1001 in front of the television receiver 1001. The camera 241 operates, for example, when an operation signal (operation of obtaining a scene list) is input from the mobile terminal 2000, and captures an image of a user in the front of the television receiver 1001. Also, the camera 241 operates, for example, when an operation signal (operation of viewing or replaying a program) is input from the mobile terminal 2000, and captures an image of a user in the front of the television receiver 1001.

The captured face image data identifies a user's face in the face image identification and processing unit 242. When a face image data is new, it is possible to add a new identification number. The image of a new face is stored in the data storage unit 236 together with its identification number.

The viewing or replay of a program by a user is monitored by a viewing and replay monitoring unit 245. When a user views or replays a program, the viewing history making unit 235 makes viewing history data and associates the viewing history data with the identification number of a user's face. Also, the viewing history data is transmitted to the data storage unit 236 and stored in a storage area for a corresponding user. The figure exemplifies that user's face image data FA, FB and FC and a plurality of mixed face data FAFC are stored in the data storage unit 236.

On the other hand, when a user selects a scene list, the viewing history data to be used is selected based on the user's face image data in front of the television receiver 1001. This selection is executed by the viewing history data selection unit 243.

In the above-mentioned embodiment, it is possible to associate viewing history data with a scene list by individual or group. When the scene list of a certain program is obtained, if the group includes a user who has not viewed the program at all and a user who has already viewed the program, it is possible to mask the scene comments and pass on a warning. The warning is, for example, that the scene comment is not all displayed because some people have not viewed the program about this scene comment at all.

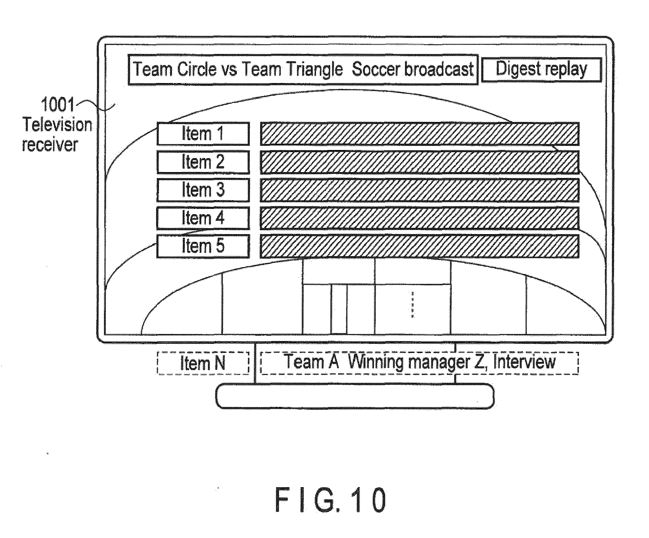

FIG. 10 illustrates an example of the screen of the television receiver 1001 when "digest replay," not "program replay," is selected in scene selection. This example is an unviewed (unreplayed) program, in which scene comments are masked.

There are following two possible methods for using a scene location time point so as to perform digest replay for a program.

The first method is that a user operates a remote controller, designates with cursor an arbitrary item (for example, first scene location time point) that describes a scene comment, and presses a determination button. Then, the television receiver replays a program for 5 to 30 seconds from the first scene location time point, replays a program for 5 to 30 seconds from the second scene location time point and replays a program for 5 to 30 seconds from the third scene location time point.

The second method is to prepare a start scene location time point and an end scene location time point (a pair of scene location time points). The replay time between the start and end of a scene location time point is, for example, approximately 5 to 30 seconds. Digest replay can be performed by preparing a plurality of such pair of scene location time points.

In this case, a mode for performing ordinary replay of a program is defined as "program replay" and a mode for performing digest replay of a program is defined as "digest replay." When a scene list is displayed on a display screen, it is possible to select either of "program replay" or "digest replay" of a replay mode. It is possible that digest replay can be executed when item "digest replay" on a menu screen is selected. For example, it is possible to designate a replay mode in the left screen of FIG. 7.

When a digest replay mode is designated and the item number on a screen is selected, digest replay is executed for its subsequent time programs.

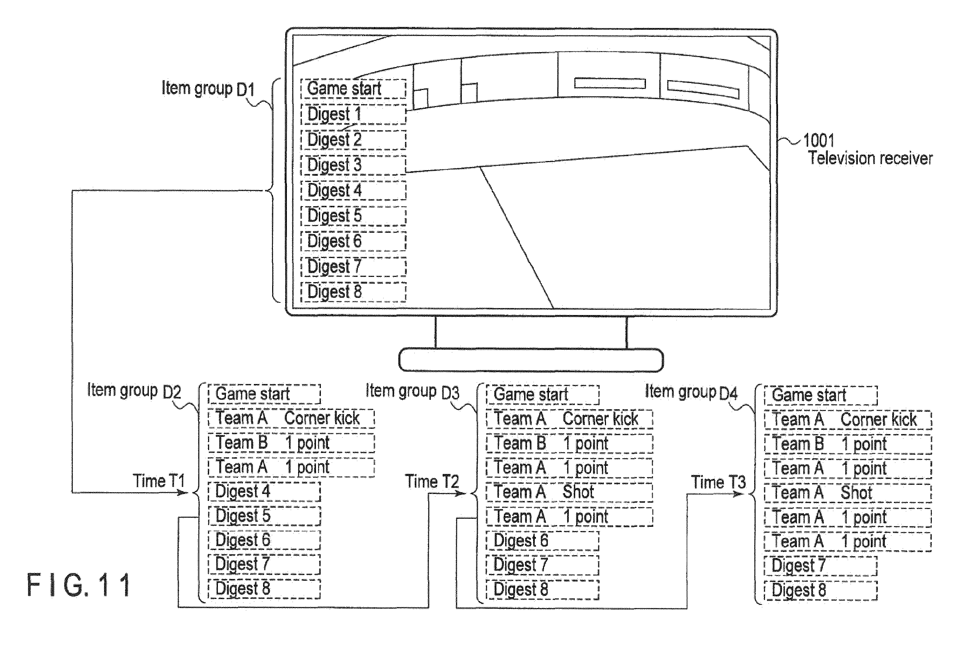

FIG. 11 is a diagram illustrating a typical example of a digest item at the time of digest replay displayed in the television receiver of still another embodiment. The program is the relay broadcast of a soccer game.

In digest replay, digest 1, digest 2, digest 3, . . . , digest n may be displayed translucently as item group D1 on a part of a screen (for example, left or right of a screen).

The upper of the figure illustrates that all the scene comments in an item are masked. When digest replay progresses and time T1 has elapsed, the masks of the comments of digest 1, digest 2 and digest 3 are removed as shown in item group D2.

For example, the following is displayed:
Digest 1 ... Team A, Corner Kick
Digest 2 ... Team B, 1 Point
Digest 3 ... Team A, 1 Point

When digest replay further progresses and time T2 has elapsed, the masks of digest 4 and digest 5 are removed as shown in item group D3.

For example, the following is displayed:
Digest 4 ... Team A, Shot
Digest 5 ... Team A, 1 Point

When digest replay still further progresses and time T3 has elapsed, the mask of digest 6 is removed as shown in item group D4.

For example, the following is displayed:
Digest 6 ... Team A, 1 Point

Thus, when digest replay progresses to the end of a program, all the comments are displayed in each item.

Note that the above-mentioned embodiment is not limited thereto. It may be possible that the operation screen of a television receiver or mobile terminal is provided with a switching button to switch execution/non-execution of the processing of avoiding viewing beforehand. Also, regarding replay mode of a program (content), it may be possible that the operation screen of a television receiver or mobile terminal is provided with a selection button to perform digest replay and replay a program from a location of setting a scene list.

In the above explanation, regarding each constituting element of the claims, the scope of the present invention is not exceeded even when the constituting elements are divided for expression or when they are combined for expression. Further, even if the claims are recited as method, the apparatus of the present invention can be applied thereto.
1001: Television receiver, 2000: Mobile terminal, 4001: Server, 102: Digital tuner apparatus, 111: Storage apparatus, 112: Wired communication transmitting/receiving unit, 113: Wireless communication transmitting/receiving unit, 114: Receiving unit, 115: Remote controller, 122: TS processing unit, 123: Audio decoder, 124: Audio data processing unit, 125: Audio output unit, 131: Video decoder, 132: Video data processing unit, 133: Video output unit, 200: Control unit, 205: Recording/replaying control unit, 211: Display processing unit, 231: Scene list control unit, 233: Mask processing unit, 235: Viewing history making unit, 236: Data storage unit

## Claims

1. An electronic apparatus, **characterized by** comprising:
a scene list obtaining unit (203) configured to obtain a scene list of a certain program from a server, wherein the scene list includes a plurality of items and each item includes each scene comment and each scene location time point that indicates each scene location in the certain program;
a viewing history storage unit (236) configured to store, regarding a recorded program, a program elapse time point that indicates a location where a replay of the recorded program has elapsed; and
a mask processing unit (233) configured to perform processing for masking a scene item corresponding to a scene location time point subsequent to the program elapse time point based on a comparison between the each scene location time point and the program elapse time point when the recorded program having a same content as the certain program exists.

2. The electronic apparatus of claim 1, **characterized in that** the mask processing unit (233) removes a mask to display a scene comment of the scene item which is masked after replaying a scene corresponding to the masked scene item.

3. The electronic apparatus of claim 1, **characterized in that** the mask processing unit (233) removes in order a mask of a scene comment of each scene item of a replayed scene after replaying a scene corresponding to the scene item which is masked on a screen where the recorded program is replayed.

4. The electronic apparatus of claim 1, **characterized in that** a replay unit (205) performs digest replay for a part of content corresponding to the each scene location time point responded to a selection operation.

5. The electronic apparatus of claim 1, **characterized in that** the program elapse time point of the viewing history storage unit (236) is made by a viewing history making unit (235).

6. The electronic apparatus of claim 1, **characterized in that** the recorded program is selected from a plurality of recorded programs recorded in a storage apparatus (111) and the plurality of recorded programs are received by a plurality of tuners (102) that operate simultaneously, respectively, and recorded in the storage apparatus.

7. A scene list processing method in an electronic apparatus configured to record a plurality of programs in a storage unit based on a control of a control unit at least by a recording/replaying apparatus, select and replay an arbitrary recorded program from the storage unit at least by the recording/replaying apparatus, **characterized by** comprising:
obtaining a scene list of a certain program from a server, wherein the scene list includes a plurality of items and each item includes each scene comment and each scene location time point that indicates each scene location in the certain program;
storing, regarding a recorded program, a program elapse time point that indicates a location where a replay of the recorded program has elapsed; and
masking a scene item corresponding to a scene location time point subsequent to the program elapse time point based on a comparison between the each scene location time point and the program elapse time point when the recorded program having a same content as the certain program exists.

8. The scene list processing method of claim 7, displaying a scene comment of the scene item which is masked after replaying a scene corresponding to the scene item which is masked.

9. The scene list processing method of claim 7, removing in order a mask of a scene comment of each scene item of a replayed scene after replaying a scene corresponding to the scene item which is masked on a screen where the recorded program is replayed.

10. A computer-readable information storage media configured to record a plurality of programs in a storage unit based on a control of a control unit at least by a recording/replaying apparatus, select and replay an arbitrary recorded program from the storage unit at least by the recording/replaying apparatus, **characterized in that** the information storage media stores a computer program having a command to:
obtain a scene list of a certain program from a server, wherein the scene list includes a plurality of items and each item includes each scene comment and each scene location time point that indicates each scene location in the certain program;
store, regarding a recorded program, a program elapse time point that indicates a location where a replay of the recorded program has elapsed; and
mask a scene item corresponding to a scene location time point subsequent to the program elapse time point based on a comparison between the each scene location time point and the program elapse time point when the recorded program having a same content as the certain program exists.
